# EUROPÄISCHE PATENTSCHRIFT

(11) **EP 3 999 753 B1**
(45) Veröffentlichungstag und Bekanntmachung des Hinweises auf die Patenterteilung: **06.09.2023**
(21) Anmeldenummer: 20742648.7
(22) Anmeldetag: 02.07.2020
(51) Int. Cl.: F16D 3/84, F16D 23/00, F16P 1/02, F02B 63/04, F02B 77/11

(54) **GETRIEBEMOTOR, AUFWEISEND EIN ÜBER EINE KUPPLUNG VON EINEM ELEKTROMOTOR ANGETRIEBENES GETRIEBE**
GEAR MOTOR, COMPRISING A GEAR MECHANISM DRIVEN VIA A CLUTCH BY AN ELECTRIC MOTOR
MOTORÉDUCTEUR COMPRENANT UN RÉDUCTEUR ENTRAÎNÉ PAR UN MOTEUR ÉLECTRIQUE PAR L'INTERMÉDIAIRE D'UN ACCOUPLEMENT

(30) Priorität: 19.07.2019 DE 102019005021
(43) Veröffentlichungstag der Anmeldung: 25.05.2022
(73) Patentinhaber: SEW-EURODRIVE GmbH & Co. KG, 76646 Bruchsal (DE)
(72) Erfinder: WAGNER, Guido, 3088 Greensborough (AU); SCHIER, Aiden, 3030 Victoria, Weribee (AU)
(86) Internationale Anmeldenummer: PCT/EP2020/025312
(87) Internationale Veröffentlichungsnummer: WO 2021/013379

(56) Entgegenhaltungen:
- EP-A1- 3 118 476
- US-A1- 2003 216 187
- US-A1- 2006 144 201
- US-A1- 2014 311 283
- US-B1- 7 520 816

## Beschreibung

Die Erfindung betrifft einen Getriebemotor, aufweisend ein über eine Kupplung von einem Elektromotor angetriebenes Getriebe.

Es ist allgemein bekannt, dass ein Getriebemotor ein von einem Motor angetriebenes Getriebe aufweist.

Aus der DE 10 2004 062 465 A1 ist ein Aggregat mit einer Schutzeinheit zur optischen und /oder visuellen Prüfung bekannt.

Aus der DE 600 33 110 T2 ist eine verstellbare Schutzvorrichtung für eine drehende Welle bekannt.

Aus der US 1 232 953 A ist eine Schutzvorrichtung für eine Rolle eines Wagenspinners einer Spinnmaschine bekannt.

Aus der US 2003/216187 A1 als nächstliegender Stand der Technik eine klappbare Schutzhaube bekannt.

Aus der US 2014/311283 A1 ist ein Schutzteil für eine Pumpe bekannt.

Aus der US 7 520 816 B1 ist eine Schutzanordnung für eine drehende Welle bekannt.

Aus der US 2006/144 201 A1 ist eine ausrichtbare Schutzanordnung für eine drehende Welle bekannt.

Der Erfindung liegt daher die Aufgabe zugrunde, einen Getriebemotor mit verbessertem Schutz weiterzubilden.

Erfindungsgemäß wird die Aufgabe bei dem Getriebemotor nach den in Anspruch 1 angegebenen Merkmalen gelöst.

Wichtige Merkmale der Erfindung bei dem Getriebemotor, aufweisend ein über eine Kupplung von einem Elektromotor angetriebenes Getriebe, sind, dass die Kupplung von einem Schutzteil zumindest teilweise umgeben ist,
wobei das Schutzteil zwei Haubenteile aufweist,
wobei die Haubenteile miteinander verbunden sind und jeweils Gitteröffnungen aufweisen,

insbesondere auf ihrer dem Elektromotor zugewandten Seite.

Erfindungsgemäß ist zusätzlich zur Kupplung ein Lüfter innerhalb des Schutzteils angeordnet. Der Lüfter ist drehfest mit der eintreibenden Welle des Getriebes verbunden und somit passiv ausgeführt. Der vom Lüfter geförderte Luftstrom wird durch die Gitteröffnungen des Schutzteils zumindest teilweise in den Zwischenraum zwischen den Luftleithaube und dem Gehäuse des Getriebes geführt.

Von Vorteil ist dabei, dass ein Schutz aus zwei Haubenteilen zusammengesetzt ist und somit einfach montierbar ist. Denn die zwei Teile sind aus zwei Richtungen heranführbar und somit der Schutz in einfacher Weise zusammensetzbar. Außerdem sind Gitteröffnungen vorhanden, die zwar ein Durchgreifen der Haubenteile mittels menschlicher Finger verhindern, aber einen Luftstrom durchlassen, insbesondere mit einem geringen Strömungswiderstand.

Weiter vorteilhaft ist, dass als Kupplung eine Turbokupplung einsetzbar ist, deren Entwärmung durch die Gitteröffnungen gesichert ist.

Bei einer vorteilhaften Ausgestaltung sind die beiden Haubenteile von Hebelverschlüssen aneinander angedrückt und/oder formschlüssig verbunden. Von Vorteil ist dabei, dass mittels der Hebelverschlüsse ein formschlüssiges Verbinden der Haubenteile ermöglicht wird, andererseits aber auch ein Andrücken beim Schließen und Anspannen der Hebelverschlüsse bewirkbar ist.

Bei einer vorteilhaften Ausgestaltung ist mit einem, insbesondere jedem, der Haubenteile jeweils ein Türteil verbunden. Von Vorteil ist dabei, dass zur bloßen Inspektion nur das Türteil aufklappbar ist und zu einer Reparatur das Türteil herausnehmbar ist. Eine Demontage der größeren Haubenteile ist somit vermeidbar. Dies ist vor allem auch deshalb vorteilhaft, weil das Schutzteil nicht nur durch bloßes Zusammenfügen der beiden Haubenteile hergestellt ist, sondern auch zum Motor hin berührend angeordnet werden muss. Hierzu sind die weiteren Rohrteile mittels des jeweiligen Langlochs zu verschieben bis Berührung zum Motor hin eintritt. Zum Getriebe hin müssen die Haubenteile derart angeordnet werden, dass die zum Getriebe hin mündende Öffnung des Schutzteils innerhalb des Luftleithaube in den Zwischenraum zwischen Luftleithaube und Getriebe mündet. Die bei der Montage und Verbindung der beiden Haubenteile somit notwendigen Justier- und Einstellarbeiten sind somit vermeidbar.

Bei einer vorteilhaften Ausgestaltung ist mit dem Türteil ein Griffteil verbunden. Von Vorteil ist dabei, dass eine vereinfachte Handhabung erreichbar ist. Das Griffteil ist bei m Drehen und bei der translatorischen Bewegung verwendbar und vereinfacht somit die Betätigung. Aber auch bei Montage ist ein Anheben des Türteils vereinfacht ausführbar.

Bei einer vorteilhaften Ausgestaltung ist mit dem Haubenteil ein Griffteil verbunden. Von Vorteil ist dabei, dass eine vereinfachte Handhabung insbesondere bei der Montage erreichbar ist. Denn das Griffteil ist an der Oberseite angebracht und somit ein Anheben in genau der Einbausituation ausführbar.

Bei einer vorteilhaften Ausgestaltung ist die Motorwelle, insbesondere der Rotor, des Elektromotors durch eine Ausnehmung des Schutzteils in den vom Schutzteil umgebenen Innenraum hindurchgeführt,
wobei das Schutzteil einen zum Elektromotor hin, insbesondere axial, hervorragenden Kragen aufweist, der am Motor, insbesondere Gehäuseteil des Motors anliegt. Von Vorteil ist dabei, dass die Montage des Schutzteils mit Berührung zum Motor hin erfolgt und somit ein Eingreifen menschlicher Finger zu einem innerhalb des Schutzteils drehenden Teils hin verhinderbar ist.

Bei einer vorteilhaften Ausgestaltung ist der Kragen aus einem am Haubenteil befestigten, ersten Rohrsegment und einem zweiten Rohrsegment gebildet,
wobei das erste Rohrsegment ein radial durchgehendes Loch aufweist, durch welches eine Schraube geführt ist, welche durch ein am zweiten Rohrsegment angeordnetes durchgehendes Langloch hindurchragt,
insbesondere wobei das Langloch in axialer Richtung ausgerichtet ist. Von Vorteil ist dabei, dass mittels des über das Langloch befestigten zweiten Rohrsegments ein Einstellen der axialen Länge des vierstückig ausgeführten Kragens ermöglicht ist und somit ein berührendes Ausführen des Schutzteils ermöglicht ist. Jedes der beiden Haubenteile weist jeweils den Kragen auf, der aus dem jeweiligen ersten und zweiten Rohrsegment gebildet ist, wobei jedes der beiden Rohrsegmente mit einem jeweiligen weiteren Rohrsegment verbunden ist.

Bei einer vorteilhaften Ausgestaltung beträgt der vom ersten Rohrsegment in Umfangsrichtung überdeckte Umfangswinkelbereich 180°,
insbesondere wobei der vom zweiten Rohrsegment in Umfangsrichtung überdeckte Umfangswinkelbereich 180° beträgt. Von Vorteil ist dabei, dass das erste Rohrsegment, welches am ersten Haubenteil angeordnet ist, zusammen mit dem ersten Rohrsegment, welches am zweiten Haubenteil angeordnet ist, ein vollständiges Rohr bilden, so dass dieses so gebildete Rohr die Motorwelle in Umfangsrichtung vollständig umgibt.

Bei einer vorteilhaften Ausgestaltung ist das Türteil mittels eines lösbaren Drehlagers mit dem Haubenteil verbunden. Von Vorteil ist dabei, dass das Türteil wahlweise drehbar ist oder translatorisch herausziehbar aus dem Drehlager und somit entfernbar.

Bei einer vorteilhaften Ausgestaltung weist das Drehlager ein erstes und ein zweites Beschlagteil auf,
wobei das erste Beschlagteil mit dem Haubenteil verbunden ist,
wobei das zweite Beschlagteil mit dem Türteil verbunden ist,
wobei das erste Beschlagteil einen Zapfen aufweist, welcher in einer Ausnehmung, insbesondere Sackloch, des zweiten Beschlagteils aufgenommen und drehbar ist,
wobei der Zapfen in axialer Richtung ausgerichtet ist, insbesondere also die längste Ausdehnung des Zapfens in axialer Richtung ausgerichtet ist. Von Vorteil ist dabei, dass das Drehlager wahlweise zur Lagerung einer Drehbewegung und alternativ durch eine translatorische Bewegung lösbar ist.

Bei einer vorteilhaften Ausgestaltung sind das erste und das zweite Haubenteil zueinander spiegelsymmetrisch und/oder baugleich ausgeführt. Von Vorteil ist dabei, dass eine geringe Anzahl von Teilen zur Herstellung des Getriebemotors notwendig ist.

Bei einer vorteilhaften Ausgestaltung drückt der Schraubenkopf einer durch eine Ausnehmung des Türteils durchgehenden Schraube das Türteil auf das Haubenteil,
wobei die Schraube in eine Gewindebohrung des Haubenteils eingeschraubt ist. Von Vorteil ist dabei, dass das Türteil während des Betriebs des Getriebemotors gesichert verbunden ist mit dem Haubenteil.

Bei einer vorteilhaften Ausgestaltung umgibt eine Luftleithaube das Getriebe zumindest teilweise,
wobei das Schutzteil eine auf seiner dem Getriebe zugewandten Seite angeordnete Ausnehmung aufweist, welche radial innerhalb der Luftleithaube angeordnet ist,
insbesondere wobei der lichte Innendurchmesser der Ausnehmung mindestens das Doppelte, insbesondere mindestens das Fünffache, des Durchmessers der eintreibenden Welle des Getriebes beträgt. Von Vorteil ist dabei, dass der geförderte Luftstrom durch den Zwischenraum zwischen der Luftleithaube und dem Getriebe durchgeleitet wird und somit auch eine verbesserte Entwärmung des Getriebes erreichbar ist. Insbesondere wenn innerhalb des Schutzteils eine Kupplung mit Lüfterfunktion oder ein Lüfter angeordnet ist, wird die Entwärmung verbessert.

Bei einer vorteilhaften Ausgestaltung weist das Haubenteil Linienanordnungen auf,
wobei jede Linienanordnung aus in einer Linie, insbesondere in einer geraden Linie, angeordneter, mit einem Abstand a voneinander regelmäßig beabstandeter, durch das Haubenteil jeweils durchgehender Gitteröffnungen gebildet ist,
wobei die Linienanordnungen zueinander parallel ausgerichtet sind und senkrecht zur Richtung der jeweiligen Linie voneinander regelmäßig beabstandet sind, insbesondere mit dem Abstand a,
insbesondere wobei jede Linienanordnung zu ihrer jeweils nächstbenachbarten Linienanordnung einen Versatz, insbesondere um die Hälfte des Abstands a, aufweist,
insbesondere wobei die Gitteröffnungen jeweils rechteckförmig ausgeführt sind. Von Vorteil ist dabei, dass ein Durchströmen des Haubenteils mit einem geringen Strömungswiderstand ermöglicht ist und dabei trotzdem eine hohe Steifigkeit des Haubenteils erhaltbar ist.

Bei einer vorteilhaften Ausgestaltung weist das Türteil Linienanordnungen auf,
wobei jede Linienanordnung aus in einer Linie, insbesondere in einer geraden Linie, angeordneter, mit einem Abstand a voneinander regelmäßig beabstandeter, durch das Türteil jeweils durchgehender Gitteröffnungen gebildet ist,
wobei die Linienanordnungen zueinander parallel ausgerichtet sind und senkrecht zur Richtung der jeweiligen Linie voneinander regelmäßig beabstandet sind, insbesondere mit dem Abstand a,
insbesondere wobei jede Linienanordnung zu ihrer jeweils nächstbenachbarten Linienanordnung einen Versatz, insbesondere um die Hälfte des Abstands a, aufweist,
insbesondere wobei die Gitteröffnungen jeweils rechteckförmig ausgeführt sind. Von Vorteil ist dabei, dass ein Durchströmen des Türteils mit einem geringen Strömungswiderstand ermöglicht ist und dabei trotzdem eine hohe Steifigkeit des Türteils erhaltbar ist.

Die Erfindung wird nun anhand von schematischen Abbildungen näher erläutert:

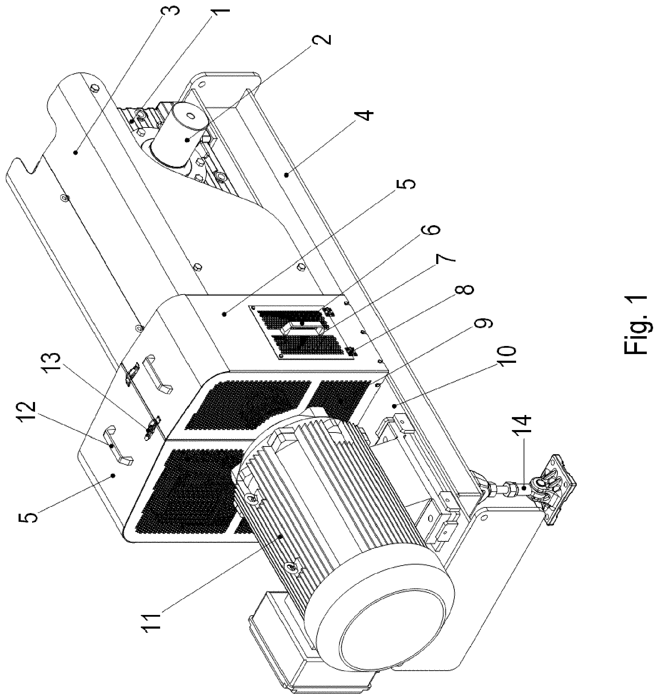

In der Figur 1 ist eine Schrägansicht eines Getriebemotors mit einem Schutzteil für eine Kupplung dargestellt.

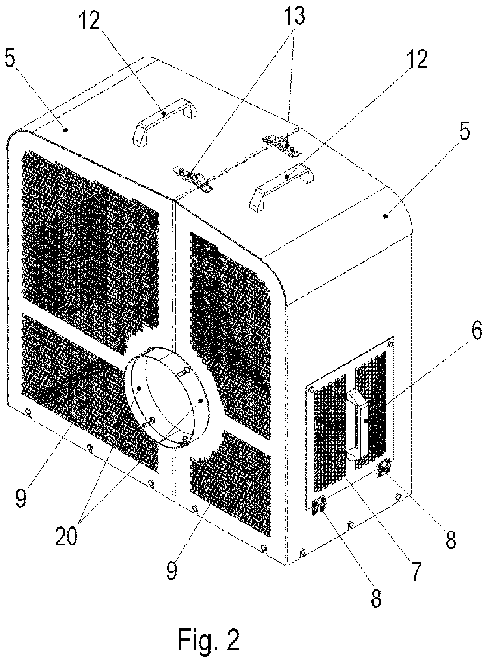

In der Figur 2 ist das Schutzteil in Schrägansicht dargestellt, welches zwei Haubenteile 5 aufweist und ein Türteil 7.
In der Figur 3 ist das Haubenteil 5 in Schrägansicht dargestellt.
In der Figur 4 ist das Türteil 7 in Schrägansicht dargestellt.
In der Figur 5 ist ein Ausschnitt der Figur 4 vergrößert dargestellt.

Wie in den Figuren dargestellt, weist der Getriebemotor ein Getriebe 1 auf, das über eine Kupplung von einem Elektromotor 11 angetrieben wird.

Die Kupplung weist drehende Teile auf und ist daher von einem Schutzteil umgeben.

Das Getriebe weist eintriebsseitig, also von der Kupplung angetrieben, eine Winkelgetriebestufe auf, die eine oder mehrere Parallelwellengetriebestufen antreibt, so dass die abtreibende Welle 2 seitlich aus dem Getriebe herausragt.

Das Getriebe 1 ist auf einem ersten Schwingenteil 4 montiert, welches mit einem zweiten Schwingenteil 10 verbunden ist, auf dem der Elektromotor 11 montiert ist, welcher das Getriebe 1 über die Kupplung antreibt.

Das erste Schwingenteil 4 ist über eine Stütze 14 am Boden der den Getriebemotor aufnehmenden Anlage abgestützt.

Das Schutzteil weist zwei Haubenteile 5 auf, die mittels Hebelverschlüssen 13 miteinander formschlüssig verbunden und aneinandergedrückt sind. Denn die Hebelverschlüsse drücken die beiden Haubenteile 5 beim Betätigen des jeweiligen Hebelverschlusses 13 aufeinander und beinhalten selbst jeweils eine formschlüssige Verbindung.

Das Schutzteil weist zum Elektromotor 11 hin eine kreisrunde Öffnung auf, die von einem axial hervorragenden Kragen berandet ist. Da das Schutzteil aus den beiden zueinander baugleichen oder zumindest spiegelsymmetrischen Haubenteilen zusammengesetzt ist, ist der Kragen aus zwei insbesondere halbkreisförmigen Rohrsegmenten 20 zusammengesetzt. Denn jedes der Haubenteile 5 weist jeweils ein Rohrsegment 20 auf, das in Umfangsrichtung 180° überdeckt. Die beiden Rohrsegmente 20 bilden zusammen ein Rohrstück, in welchem die Motorwelle, insbesondere der Rotor, des Elektromotors 11 aufgenommen ist, wobei ein radialer Abstand zwischen der Motorwelle vorhanden ist.

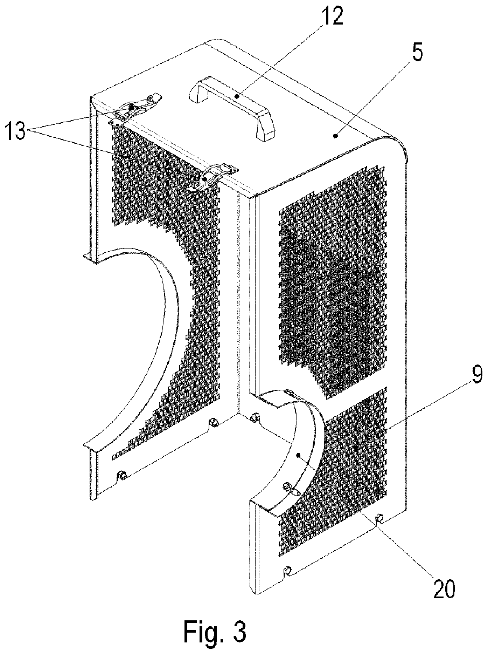

Wie besonders deutlich in Figur 3 erkennbar, ist jedes der Rohrsegment 20 durch ein jeweils aufgeschobenes und mittels Schrauben verbundenes weiteres Rohrsegment axial verlängerbar. Die Schrauben ragen dabei jeweils durch ein erstes Loch des Rohrsegments 20 und durch ein axial gerichtetes, durch das weitere Rohrsegment durchgehendes Langloch. Auf diese Weise ist das weitere Rohrsegment axial verschiebbar angeordnet und bei der Montage am Gehäuse des Elektromotors 11 ausrichtbar und andrückbar. Somit ist nur ein vernachlässigbarer Spalt zwischen dem weiteren Rohrsegment und dem Gehäuse des Motors vorhanden.

Zum Getriebe hin weist das Schutzteil eine runde Öffnung auf, deren lichter Innendurchmesser größer als das Doppelte, insbesondere größer als das Fünffache, des Durchmessers der eintreibenden Welle des Getriebes ist. Da die Luftleithaube 3 bis zum Schutzteil axial heranragt, ist somit nur ein vernachlässigbarer Spalt zwischen Schutzteil und Luftleithaube 3 vorhanden. Der vom Innenraum des Schutzteils in den Zwischenraum zwischen der Luftleithaube 3 und dem Getriebegehäuse geförderte Luftstrom hat also in dem Übergangsbereich keinen zu berücksichtigenden Strömungswiderstand zu überwinden. Somit ist eine effiziente Entwärmung ermöglicht.

An jedem der Haubenteile 5 ist jeweils ein Griffteil 12 angebracht, so dass ein einfaches Handling des jeweiligen Haubenteils 5 ermöglicht ist.

Jedes der Haubenteile 5 weist an seiner dem Motor 11 und an seiner dem Getriebe zugewandten Seite ein Gitter auf, so dass ein Luftstrom durch das Schutzteil durchführbar ist. Auf diese Weise ist einerseits ein Kühlluftstrom zum Kühlen der Kupplung und andererseits auch ein Luftstrom ermöglicht, der zum Getriebe 1 hin gefördert wird und vorzugsweise durch einen Zwischenraum zwischen einer auf das Getriebegehäuse aufgesetzten Luftleithaube 3 und dem Getriebe 1 geleitet wird.

Das jeweilige Türteil 7 verschließt eine insbesondere rechteckförmige durch das jeweilige Haubenteil 5 durchgehende Ausnehmung. Dabei ist ein Drehlager 8 vorgesehen, welches das jeweilige Türteil 7 mit dem Haubenteil 5 drehbar verbindet. Auf diese Weise ist insbesondere nach Lösen von Sicherungsschrauben eine Drehbewegung des Türteils 7, insbesondere ein drehendes Aufklappen, ausführbar. Allerdings ist das Drehlager 8 lösbar ausgeführt, insbesondere aushängbar. Hierzu ist ein axial gerichtetes, insbesondere also ein parallel zur Drehachse der Motorwelle oder eintreibenden Welle gerichtetes, insbesondere translatorisches, Verschieben der beiden Teile des Drehlagers 8 relativ zueinander ausführbar und dabei das jeweilige Türteil 7 lösbar vom Haubenteil 5.

Das Drehlager 8 besteht aus einem ersten und einem zweiten Beschlagteil. Das erste Beschlagteil ist an das Haubenteil 5 mittels zwei Schrauben angeschraubt. Das zweite Beschlagteil ist mittels zwei Schrauben an das Türteil 7 angeschraubt. Das erste Beschlagteil weist einen zylindrischen Zapfen auf, der in eine entsprechende Sacklochbohrung des zweiten Beschlagteils eingesteckt ist. Somit ist der Zapfen in der Sacklochbohrung drehbar. Wenn der Zapfen axial gerichtet herausgezogen wird, ist das Drehlager aufgetrennt und somit das Türteil 7 separiert vom Haubenteil 5.

Für eine Inspektion der Kupplung oder der sonstigen Komponenten des Innenraums des Schutzteils ist das Türteil 7 durch Drehbewegung schnell und einfach öffenbar.

Für eine Reparatur oder Wartung ist das Türteil 7 durch die translatorische Relativbewegung zum Haubenteil 5 entfernbar und/oder separierbar. Die Reparatur oder Wartung ist dann einfach ausführbar, weil der Innenraum ungestört zugänglich ist.

Am Türteil 7 ist ein Griffteil 6 befestigt, so dass das Handling des Türteils 7 möglichst einfach ausführbar ist.

Das Türteil 7 weist ein Gitter von Gitteröffnungen auf, so dass ein Luftstrom möglichst effektiv, also mit einem geringen Strömungswiderstand zwischen Innenraum und Umgebung austauschbar ist.

Hierzu ist jede der Gitteröffnungen des Gitters rechteckförmig. Das Gitter ist als zweidimensionales regelmäßiges, endliches Gitter ausgeführt.

Dabei weist das Gitter parallel zueinander ausgerichtete Gitterlinien auf, wobei jede Gitterlinie voneinander regelmäßig beabstandete Gitteröffnungen aufweist, wobei der Abstand von einer jeweiligen Gitteröffnung zur nächstbenachbarten Gitteröffnung a ist.

Jede Gitterlinie weist zur nächstbenachbarten Gitterlinie einen Versatz mit dem Wert a/2 in Linienrichtung der Gitterlinie auf. Senkrecht zur Linienrichtung sind die Gitterlinien voneinander regelmäßig beabstandet, insbesondere ebenfalls mit dem Abstand a.

Die Linienrichtung ist parallel zur Richtung der Normale einer vom Richtungsvektor der abtreibenden Welle 2 und vom Richtungsvektor der eintreibenden Welle oder Motorwelle aufgespannten Ebene.

Das Haubenteil 5 weist an seiner dem Motor 11 zugewandten Seite ebenfalls ein solches Gitter auf, wobei aber die Linienrichtung des Gitters des Haubenteils 5 senkrecht zur Linienrichtung des Gitters des Türteils 7 ausgerichtet ist.

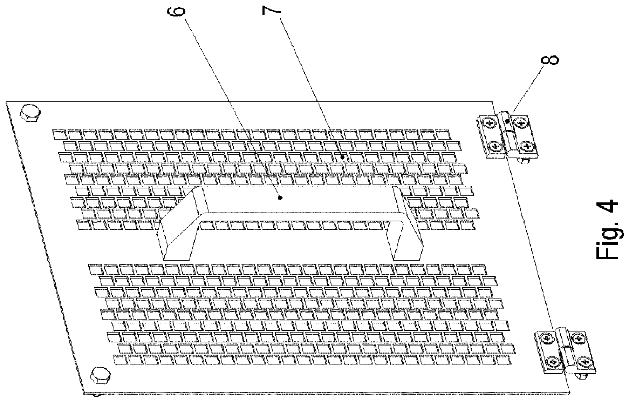

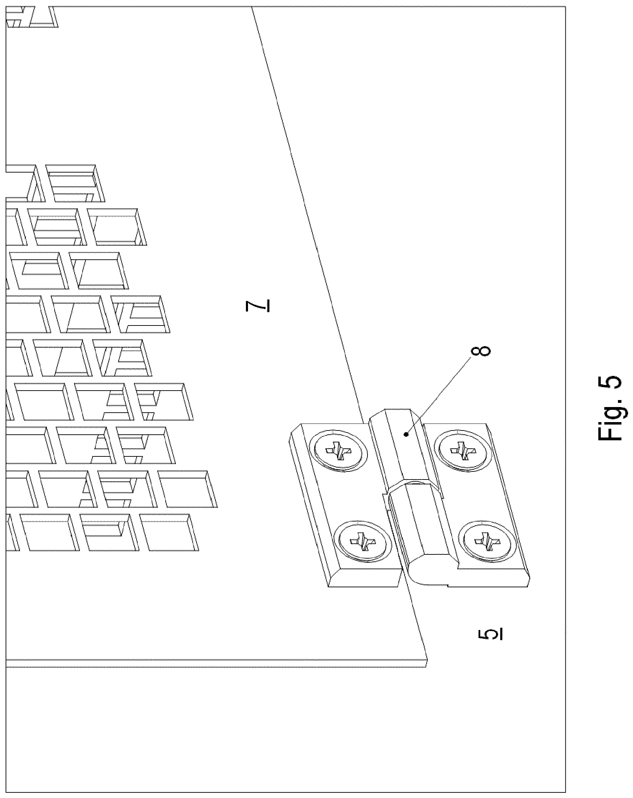

Wie in Figur 4 und Figur 5 ersichtlich, sind die Stege zwischen den Gitteröffnungen sehr dünn ausführbar und trotzdem eine hohe Stabilität erreichbar.

### Bezugszeichenliste

1 Getriebe
2 abtreibende Welle
3 Luftleithaube
4 erstes Schwingenteil
5 Haubenteil
6 Griffteil
7 Türteil
8 aushängbares Drehlager
9 Gitteröffnungen
10 zweiten Schwingenteil
11 Elektromotor
12 Griffteil
13 Hebelverschluss
14 Stütze
20 Rohrsegement

## Patentansprüche

1. Getriebemotor, aufweisend ein über eine Kupplung von einem Elektromotor (11) angetriebenes Getriebe (1),
wobei die Kupplung von einem Schutzteil zumindest teilweise umgeben ist,
wobei das Schutzteil zwei Haubenteile (5) aufweist,
**dadurch gekennzeichnet, dass**
die Haubenteile (5) miteinander verbunden sind und auf ihrer dem Elektromotor (11) zugewandten Seite jeweils Gitteröffnungen (9) aufweisen,
wobei jedes der Haubenteile (5) an seiner dem Motor (11) und an seiner dem Getriebe (1) zugewandten Seite ein Gitter aufweist, so dass ein Luftstrom durch das Schutzteil durchführbar ist, der als Kühlluftstrom ein Kühlen der Kupplung ermöglicht und zum Getriebe (1) hin gefördert wird und durch einen Zwischenraum zwischen einer auf das Gehäuse des Getriebes (1) aufgesetzten Luftleithaube (3) und dem Getriebe (1) geleitet wird,
wobei ein Lüfter zusätzlich zur Kupplung innerhalb des Schutzteils angeordnet ist,
wobei der Lüfter drehfest mit der eintreibenden Welle (2) des Getriebes (1) verbunden und somit passiv ausgeführt ist,
wobei der vom Lüfter geförderte Luftstrom durch die Gitteröffnungen (9) des Schutzteils zumindest teilweise in einen Zwischenraum zwischen der Luftleithaube (3) und dem Gehäuse des Getriebes (1) geführt ist.

2. Getriebemotor nach Anspruch 1,
**dadurch gekennzeichnet, dass**
die beiden Haubenteile (5) von Hebelverschlüssen aneinander angedrückt und/oder formschlüssig verbunden sind.

3. Getriebemotor nach einem der vorangegangenen Ansprüche,
**dadurch gekennzeichnet, dass**
mit einem, insbesondere jedem, der Haubenteile (5) jeweils ein Türteil (7) verbunden ist.

4. Getriebemotor nach Anspruch 3,
**dadurch gekennzeichnet, dass**
mit dem jeweiligen Türteil (7) ein jeweiliges Griffteil (6) verbunden ist.

5. Getriebemotor nach einem der vorangegangenen Ansprüche,
**dadurch gekennzeichnet, dass**
mit dem jeweiligen Haubenteil (5) ein jeweiliges Griffteil (6) verbunden ist.

6. Getriebemotor nach einem der vorangegangenen Ansprüche,
**dadurch gekennzeichnet, dass**
die Motorwelle, insbesondere der Rotor, des Elektromotors (11) durch eine Ausnehmung des Schutzteils durch den vom Schutzteil umgebenen Innenraum hindurchgeführt ist,
wobei das Schutzteil einen zum Elektromotor (11) hin, insbesondere axial, hervorragenden Kragen aufweist, der am Motor, insbesondere Gehäuseteil des Motors anliegt.

7. Getriebemotor nach Anspruch 6,
**dadurch gekennzeichnet, dass**
der Kragen aus einem am jeweiligen Haubenteil (5) befestigten, jeweiligen ersten Rohrsegment und einem zweiten Rohrsegment gebildet ist,
wobei das jeweilige erste Rohrsegment ein radial durchgehendes Loch aufweist, durch welches eine Schraube geführt ist, welche durch ein am jeweiligen zweiten Rohrsegment angeordnetes durchgehendes Langloch hindurchragt,
insbesondere wobei das Langloch in axialer Richtung ausgerichtet ist.

8. Getriebemotor nach Anspruch 7,
**dadurch gekennzeichnet, dass**
der vom ersten Rohrsegment in Umfangsrichtung überdeckte Umfangswinkelbereich 180° beträgt,
insbesondere wobei der vom zweiten Rohrsegment in Umfangsrichtung überdeckte Umfangswinkelbereich 180° beträgt.

9. Getriebemotor nach einem der Ansprüche 3 bis 8,
**dadurch gekennzeichnet, dass**
das Türteil (7) mittels eines lösbaren Drehlagers (8) mit dem Haubenteil (5) verbunden ist.

10. Getriebemotor nach einem der vorangegangenen Ansprüche,
**dadurch gekennzeichnet, dass**
das Drehlager (8) ein erstes und ein zweites Beschlagteil aufweist,
wobei das erste Beschlagteil mit dem Haubenteil (5) verbunden ist,
wobei das zweite Beschlagteil mit dem Türteil (7) verbunden ist,
wobei das erste Beschlagteil einen Zapfen aufweist, welcher in einer Ausnehmung, insbesondere Sackloch, des zweiten Beschlagteils aufgenommen und drehbar ist,
wobei der Zapfen in axialer Richtung ausgerichtet ist, insbesondere also die längste Ausdehnung des Zapfens in axialer Richtung ausgerichtet ist.

11. Getriebemotor nach einem der vorangegangenen Ansprüche,
**dadurch gekennzeichnet, dass**
das erste und das zweite Haubenteil (5) zueinander spiegelsymmetrisch und/oder baugleich ausgeführt sind.

12. Getriebemotor nach einem der Ansprüche 3 bis 11,
**dadurch gekennzeichnet, dass**
der Schraubenkopf einer durch eine Ausnehmung des Türteils durchgehenden Schraube das Türteil (7) auf das Haubenteil (5) drückt,
wobei die Schraube in eine Gewindebohrung des Haubenteils (5) eingeschraubt ist.

13. Getriebemotor nach einem der vorangegangenen Ansprüche,
**dadurch gekennzeichnet, dass**
eine Luftleithaube (3) das Getriebe (1) zumindest teilweise umgibt,
wobei das Schutzteil eine auf seiner dem Getriebe (1) zugewandten Seite angeordnete Ausnehmung aufweist, welche radial innerhalb der Luftleithaube (3) angeordnet ist,
insbesondere wobei der lichte Innendurchmesser der Ausnehmung mindestens das Doppelte, insbesondere mindestens das Fünffache, des Durchmessers der eintreibenden Welle des Getriebes (1) beträgt.

14. Getriebemotor nach einem der vorangegangenen Ansprüche,
**dadurch gekennzeichnet, dass**
das Haubenteil (5) Linienanordnungen aufweist,
wobei jede Linienanordnung aus in einer Linie, insbesondere in einer geraden Linie, angeordneter, mit einem Abstand a voneinander regelmäßig beabstandeter, durch das Haubenteil (5) jeweils durchgehender Gitteröffnungen (9) gebildet ist,
wobei die Linienanordnungen zueinander parallel ausgerichtet sind und senkrecht zur Richtung der jeweiligen Linie voneinander regelmäßig beabstandet sind, insbesondere mit dem Abstand a,
insbesondere wobei jede Linienanordnung zu ihrer jeweils nächstbenachbarten Linienanordnung einen Versatz, insbesondere um die Hälfte des Abstands a, aufweist,
insbesondere wobei die Gitteröffnungen (9) jeweils rechteckförmig ausgeführt sind.

15. Getriebemotor nach einem der vorangegangenen Ansprüche,
**dadurch gekennzeichnet, dass**
das Türteil (7) Linienanordnungen aufweist,
wobei jede Linienanordnung aus in einer Linie, insbesondere in einer geraden Linie, angeordneten, mit einem Abstand a voneinander regelmäßig beabstandeten, durch das Türteil (7) jeweils durchgehenden Gitteröffnungen (9) gebildet ist,
wobei die Linienanordnungen zueinander parallel ausgerichtet sind und senkrecht zur Richtung der jeweiligen Linie voneinander regelmäßig beabstandet sind, insbesondere mit dem Abstand a,
insbesondere wobei jede Linienanordnung zu ihrer jeweils nächstbenachbarten Linienanordnung einen Versatz, insbesondere um die Hälfte des Abstands a, aufweist,
insbesondere wobei die Gitteröffnungen (9) jeweils rechteckförmig ausgeführt sind.

## Claims

1. Gear motor, comprising a gear mechanism (1) driven via a clutch by an electric motor (11),
wherein the clutch is at least partially enclosed by a protective part,
wherein the protective part comprises two cowl parts (5),
**characterized in that**
the cowl parts (5) are connected to each other and each comprise grille openings (9) on their side facing towards the electric motor (11),
wherein each of the cowl parts (5) comprises a grille on its side facing towards the motor (11) and on its side facing towards the gear mechanism (1), so that an airflow can be guided through the protective part, which airflow, as a cooling airflow, enables cooling of the clutch and is conveyed towards the gear mechanism (1) and is conducted through an intermediate space between an air guiding cowl (3), which is placed on the housing of the gear mechanism (1), and the gear mechanism (1),
wherein a fan is arranged inside the protective part in addition to the clutch,
wherein the fan is connected in a rotationally fixed manner to the driving shaft (2) of the gear mechanism (1) and is therefore passive,
wherein the airflow conveyed by the fan is guided through the grille openings (9) of the protective part at least partially into an intermediate space between the air guiding cowl (3) and the housing of the gear mechanism (1).

2. Gear motor according to claim 1,
**characterized in that**
the two cowl parts (5) are pressed against each other and/or connected in a form-fitting manner by lever catches.

3. Gear motor according to any one of the preceding claims,
**characterized in that**
a door part (7) is respectively connected to one, in particular each, of the cowl parts (5).

4. Gear motor according to claim 3,
**characterized in that**
a respective handle part (6) is connected to the respective door part (7).

5. Gear motor according to any one of the preceding claims,
**characterized in that**
a respective handle part (6) is connected to the respective cowl part (5).

6. Gear motor according to any one of the preceding claims,
**characterized in that**
the motor shaft, in particular the rotor, of the electric motor (11) is guided through an aperture of the protective part through the interior enclosed by the protective part,
wherein the protective part comprises a collar which protrudes, in particular axially, towards the electric motor (11) and which bears against the motor, in particular against the housing part of the motor.

7. Gear motor according to claim 6,
**characterized in that**
the collar is formed of a respective first tube segment, which is fastened to the respective cowl part (5), and a second tube segment,
wherein the respective first tube segment has a radial through-hole, through which a screw is guided, which screw protrudes through a through-slot arranged on the respective second tube segment,
in particular wherein the slot is oriented in the axial direction.

8. Gear motor according to claim 7,
**characterized in that**
the circumferential angle range covered by the first tube segment in the circumferential direction is 180°,
in particular wherein the circumferential angle range covered by the second tube segment in the circumferential direction is 180°.

9. Gear motor according to any one of claims 3 to 8,
**characterized in that**
the door part (7) is connected to the cowl part (5) by means of a detachable pivot bearing (8).

10. Gear motor according to any one of the preceding claims,
**characterized in that**
the pivot bearing (8) comprises a first and a second fitting part,
wherein the first fitting part is connected to the cowl part (5),
wherein the second fitting part is connected to the door part (7),
wherein the first fitting part comprises a pin, which is received in an aperture, in particular a blind hole, of the second fitting part and is rotatable,
wherein the pin is oriented in the axial direction, that is to say in particular the longest extension of the pin is oriented in the axial direction.

11. Gear motor according to any one of the preceding claims,
**characterized in that**
the first and the second cowl part (5) are mirror-symmetrical and/or structurally identical to each other.

12. Gear motor according to any one of claims 3 to 11,
**characterized in that**
the screw head of a screw passing through an aperture of the door part presses the door part (7) onto the cowl part (5), wherein the screw is screwed into a threaded bore of the cowl part (5).

13. Gear motor according to any one of the preceding claims,
**characterized in that**
an air guiding cowl (3) at least partially encloses the gear mechanism (1),
wherein the protective part has an aperture arranged on its side facing towards the gear mechanism (1), which aperture is arranged radially inside the air guiding cowl (3),
in particular wherein the clear internal diameter of the aperture is at least two times, in particular at least five times, the diameter of the driving shaft of the gear mechanism (1) .

14. Gear motor according to any one of the preceding claims,
**characterized in that**
the cowl part (5) comprises line arrangements,
wherein each line arrangement is formed of grille openings (9) respectively passing through the cowl part (5), which grille openings are arranged in a line, in particular in a straight line, and are regularly spaced apart from each other at a distance a,
wherein the line arrangements are oriented parallel to each other and are regularly spaced apart from each other perpendicular to the direction of the respective line, in particular at the distance a,
in particular wherein each line arrangement has an offset, in particular by half of the distance a, relative to its next-adjacent line arrangement,
in particular wherein the grille openings (9) are each rectangular.

15. Gear motor according to any one of the preceding claims,
**characterized in that**
the door part (7) comprises line arrangements,
wherein each line arrangement is formed of grille openings (9) respectively passing through the door part (7), which grille openings are arranged in a line, in particular in a straight line, and are regularly spaced apart from each other at a distance a,
wherein the line arrangements are oriented parallel to each other and are regularly spaced apart from each other perpendicular to the direction of the respective line, in particular at the distance a,
in particular wherein each line arrangement has an offset, in particular by half of the distance a, relative to its next-adjacent line arrangement,
in particular wherein the grille openings (9) are each rectangular.

## Revendications

1. Motoréducteur présentant une transmission (1) entraînée par un moteur électrique (11) par l'intermédiaire d'un embrayage,
l'embrayage étant entouré au moins partiellement d'une partie de protection,
la partie de protection présentant deux parties de capot (5),
**caractérisé en ce que**
les parties de capot (5) sont reliées entre elles et présentent chacune des ouvertures grillagées (9) sur leur côté tourné vers le moteur électrique (11),
chacun des parties de capot (5) présentant une grille sur son côté tourné vers le moteur (11) et sur son côté tourné vers la transmission (1), de sorte qu'un flux d'air peut être réalisé à travers la partie de protection, qui permet un refroidissement de l'embrayage en tant que flux d'air de refroidissement et est transporté vers la transmission (1) et est guidé à travers un espace entre un capot de guidage d'air (3) appliqué sur le boîtier de la transmission (1) et la transmission (1),
l'un des ventilateurs étant agencé à l'intérieur de la partie de protection en plus de l'embrayage,
le ventilateur étant solidaire en rotation de l'arbre d'entraînement (2) de la transmission (1) et étant réalisé passif,
le flux d'air refoulé par le ventilateur étant guidé à travers les ouvertures grillagées (9) de la partie de protection au moins en partie dans un espace intermédiaire entre le capot de guidage d'air (3) et le boîtier de la transmission (1).

2. Motoréducteur selon la revendication 1,
**caractérisé en ce que**
les deux parties de capot (5) sont pressées l'une contre l'autre par des fermetures à levier et/ou reliées l'une à l'autre par complémentarité de forme.

3. Motoréducteur selon l'une quelconque des revendications précédentes,
**caractérisé en ce que**
une partie de porte (7) est respectivement reliée à une, en particulier à chacune des parties de capot (5).

4. Motoréducteur selon la revendication 3,
**caractérisé en ce que**
une partie de poignée respective (6) est reliée à la partie de porte respective (7).

5. Motoréducteur selon l'une quelconque des revendications précédentes,
**caractérisé en ce que**
une partie de poignée respective (6) est reliée à la partie de capot respective (5).

6. Motoréducteur selon l'une quelconque des revendications précédentes,
**caractérisé en ce que**
l'arbre de moteur, en particulier le rotor, du moteur électrique (11) est guidé à travers un évidement de la partie de protection à travers l'espace intérieur entouré par la partie de protection,
la partie de protection présentant une collerette en saillie vers le moteur électrique (11), en particulier axialement, qui s'applique contre le moteur, en particulier contre la partie de boîtier du moteur.

7. Motoréducteur selon la revendication 6,
**caractérisé en ce que**
la collerette est formée d'un premier segment de tube respectif fixé à la partie de capot respective (5) et d'un second segment de tube,
le premier segment de tube respectif présentant un trou traversant radialement à travers lequel est guidée une vis qui pénètre dans un trou oblong traversant disposé sur le second segment de tube respectif,
le trou oblong étant en particulier orienté dans la direction axiale.

8. Motoréducteur selon la revendication 7,
**caractérisé en ce que**
la zone angulaire périphérique recouverte circonférentiellement par le premier segment de tube est de 180°,
en particulier, la zone angulaire périphérique recouverte par le second segment de tube dans la direction circonférentielle étant de 180°.

9. Motoréducteur selon l'une quelconque des revendications 3 à 8,
**caractérisé en ce que**
la partie de porte (7) est reliée à la partie de capot (5) au moyen d'un palier rotatif amovible (8).

10. Motoréducteur selon l'une quelconque des revendications précédentes,
**caractérisé en ce que**
le palier rotatif (8) présente une première et une seconde partie de ferrure,
la première partie de ferrure étant reliée à la partie de capot (5),
la seconde partie de ferrure étant reliée à la partie de porte (7),
la première partie de ferrure présentant un tourillon qui est logé dans un évidement, en particulier un trou borgne, de la seconde partie de ferrure et qui peut tourner,
le tourillon étant orienté dans la direction axiale, en particulier la plus longue extension du tourillon étant orientée dans la direction axiale.

11. Motoréducteur selon l'une quelconque des revendications précédentes,
**caractérisé en ce que**
les première et seconde parties de capot (5) sont symétriques en miroir et/ou de construction identique l'une par rapport à l'autre.

12. Motoréducteur selon l'une quelconque des revendications 3 à 11,
**caractérisé en ce que**
la tête de vis d'une vis traversant un évidement de la partie de porte presse la partie de porte (7) sur la partie de capot (5),
la vis étant vissée dans un trou fileté de la partie de capot (5).

13. Motoréducteur selon l'une quelconque des revendications précédentes,
**caractérisé en ce que**
un capot de guidage d'air (3) entoure au moins partiellement la transmission (1),
la partie de protection présentant un évidement agencé sur son côté tourné vers la transmission (1), qui est agencé radialement à l'intérieur du capot de guidage d'air (3), le diamètre intérieur libre de l'évidement étant en particulier au moins le double, en particulier au moins le quintuple, du diamètre de l'arbre d'entraînement de la transmission (1).

14. Motoréducteur selon l'une quelconque des revendications précédentes,
**caractérisé en ce que**
la partie de capot (5) présente des agencements de lignes
chaque agencement de lignes étant formé par des ouvertures grillagées (9) agencées en une ligne, en particulier en une ligne droite, régulièrement espacées les unes des autres d'une distance a, traversant respectivement la partie de capot (5),
les agencements de lignes étant orientés parallèlement les uns aux autres et étant régulièrement espacés les uns des autres perpendiculairement à la direction de la ligne respective, en particulier de la distance a,
en particulier, chaque agencement de lignes présentant un décalage par rapport à l'agencement de lignes le plus proche, en particulier de la moitié de la distance a,
les ouvertures grillagées (9) étant réalisées respectivement de forme rectangulaire.

15. Motoréducteur selon l'une quelconque des revendications précédentes,
**caractérisé en ce que**
la partie de porte (7) présente des agencements de lignes,
chaque agencement de lignes étant formé par des ouvertures grillagées (9) agencées respectivement en une ligne, en particulier en une ligne droite, régulièrement espacées les unes des autres d'une distance a, à travers la partie de porte (7),
les agencements de lignes étant orientés parallèlement les uns aux autres et étant régulièrement espacés les uns des autres perpendiculairement à la direction de la ligne respective, en particulier de la distance a,
en particulier, chaque agencement de lignes présentant un décalage par rapport à l'agencement de lignes le plus proche, en particulier de la moitié de la distance a, les ouvertures grillagées (9) étant en particulier réalisées respectivement en forme de rectangle.
